# EUROPÄISCHE PATENTSCHRIFT

(11) **EP 1 777 439 B1**
(45) Veröffentlichungstag und Bekanntmachung des Hinweises auf die Patenterteilung: **15.12.2010**
(21) Anmeldenummer: 06021782.5
(22) Anmeldetag: 18.10.2006
(51) Int. Cl.: F16H 55/06

(54) **Verfahren zum Herstellen eines Zahnrads**
Method of manufacturing a toothed gear
Procédé de fabrication d'une roue dentée

(30) Priorität: 19.10.2005 DE 102005050439
(43) Veröffentlichungstag der Anmeldung: 25.04.2007
(73) Patentinhaber: IMS Gear GmbH, 78166 Donaueschingen (DE)
(72) Erfinder: Oberle, Stephan, 78050 Villingen-Schwenningen (DE)
(74) Vertreter: Patentanwälte Westphal, Mussgnug & Partner

(56) Entgegenhaltungen:
- DE-A1- 3 942 761
- DE-A1- 10 127 224
- US-A1- 2002 078 777

## Beschreibung

Die Erfindung bezieht sich auf ein Zahnrad mit den oberbegrifflichen Merkmalen des Patentanspruchs 1 und auf ein Verfahren zum Herstellen eines Zahnrads mit den oberbegrifflichen Merkmalen des Patentanspruchs 6.

Beispielsweise im Bereich von Servolenkungen sind so genannte EPAS-Zahnräder (EPAS: Electric Power Assisted Steering / mittels elektrischer Leistung unterstützte Steuerung) bekannt. Derartige Zahnräder bestehen aus einem Guss-Polyamid-Ring, welcher mit einer großen Metallnabe verklebt wird. Anschlie-ßend wird ein Zahnkranz spanend verzahnt in der Außenseite des Guss-Polyamid-Rings ausgebildet. Alternativ sind Zahnräder bekannt, bei denen eine große Stahlnabe umspritzt wird. Unter einer großen Stahlnabe oder Metallnabe wird eine Nabe verstanden, welche größer als ein halber Durchmesser des derart ausgebildeten Zahnrads ist.

Bekannt sind somit Zahnräder mit einem Außenteil, welches außenseitig einen eigentlichen Zahnkranz trägt, und mit einem Einlageteil, welches als insbesondere große Metallnabe ausgebildet ist. Die Verbindung erfolgt entweder durch ein mechanisches Ineinander-Einrasten dieser beiden Komponenten oder über ein zwischen diese gelegtes Verbindungsteil in Art eines Zwischenrings, welcher zwischen diese zum formschlüssigen Verbinden des Außenteils und des Einlageteils eingesetzt wird. Zum Erzielen des Formschlusses dienen dabei Verzahnungsstrukturen auf der Außenseite und der Innenseite des ringförmigen Verbindungsteils, welche in entsprechende Gegenstrukturen an der Innenseite des Außenteils bzw. an der Außenseite des Einlageteils ausgebildet eingreifen. Bedingt durch die Ausbildung des Verbindungsteils aus zwar Kunststoff aber mit Blick auf die erforderliche Steifigkeit relativ starrem Kunststoff, können solche Verzahnungsstrukturen bei einer Rastverbindung nur sehr klein dimensioniert ausgebildet werden, um die Komponenten noch ineinander einsetzen zu können.

Das Aufspritzen des Außenteils auf die Metallnabe ermöglicht zwar größere Verzahnungsstrukturen zwischen diesen, so dass eine gegenüber dem Zusammensetzen aus einzelnen Komponenten verbesserte Rotationsfestigkeit erzielbar ist, jedoch ist ein solches Umspritzen des Einlageteils mit Nachteilen verbunden.

Umspritzter Kunststoff für die Verzahnung, welche außenseitig am Außenteil auszubilden ist, wird im freien Schwindungsverhalten behindert. Dadurch steht der Kunststoffring permanent unter Zugspannung. Ein großer Einleger als Einlageteil bedeutet diesbezüglich auch eine große behinderte Schwundspannung. Schwundspannungen sind Zugspannungen und erhöhen die wirksamen Zahnfußspannung der Drehmomentübertragung und bedingen somit eine geringere Festigkeit der Zähne. Bei gleichem Außenumfang des Außenteils bzw. des am Außenteil ausgebildeten Zahnkranzes bedeutet hingegen ein kleines Einlageteil einen erforderlichen größeren Kunststoffanteil. Unverstärkter Kunststoff hat jedoch sehr temperaturabhängige mechanische Eigenschaften. Ein hoher Kunststoffanteil bedeutet entsprechend eine hohe Dimensionsänderung bei Änderung der Umgebungstemperatur. Außerdem bedeutet ein hoher Kunststoffanteil eine hohe unzuverlässige Verformung bei größeren Antriebsmomenten, welche auf den außenseitigen Zahnkranz einwirken. Außerdem bedeutet eine kleine Metallnabe als Einlageteil eine schlechte Drehmoment-Mitnahme zwischen der Metallnabe und einem außenseitigen Kunststoffzahnkranz.

Aus der US 2002/078777 A1, der DE 101 27 224 A1 sowie der DE 39 42 761 A1 sind Zahnräder bekannt, die ein Außenteil, ein Einlageteil und ein Verbindungsteil zum formschlüssigen Verbinden des Außenteils und des Einlageteils aufweisen, wobei das zumindest eine Verbindungsteil aus einem zwischen das Außenteil und das Einlageteil gegossenen Material ausgebildet ist. Ebenfalls ist diesen Dokumenten ein Verfahren zum Herstellen eines derartigen Zahnrads zu entnehmen, bei dem ein Außenteil und ein Einlageteil mit einem Verbindungsteil formschlüssig verbunden werden, wobei zumindest ein solches Verbindungsteil zwischen das Außenteil und das Einlageteil gegossen wird.

Die Aufgabe der Erfindung besteht darin, ein Verfahren zum Herstellen eines Zahnrads mit einem einfachen Aufbau bei zugleich guter Verbindung von dessen Einzelkomponenten bereitzustellen vorzuschlagen.

Diese Aufgabe wird durch ein Verfahren zum Herstellen eines Zahnrads mit den Merkmalen des Patentanspruchs 1 gelöst. Vorteilhafte Ausgestaltungen sind Gegenstand von abhängigen Ansprüchen.

Bevorzugt wird demgemäß insbesondere ein Zahnrad mit einem Außenteil, mit einem Einlageteil und mit einem Verbindungsteil zum formschlüssigen Verbinden des Außenteils und des Einlageteils, wobei das zumindest eine Verbindungsteil aus einem zwischen das Außenteil und das Einlageteil gegossenen Material ausgebildet.

Natürlich können vom Grundgedanken her auch mehrere ggfs. ineinander verzahnte Verbindungsteile zwischen das Außenteil und das Einlageteil gegossen werden, jedoch bietet ein einziges Verbindungsteil eine besonders gute Stabilität.

Erkennbar ist ein derartiges Verbindungsteil insbesondere daran, dass es hintergriffige Strukturen ermöglicht, welche aufgrund eines tiefen Eingriffs in das Außenteil und in das Einlageteil eine besonders feste Verzahnung gegen Rotationskräfte und achsparallele Kräfte bieten. Ermöglicht werden hintergriffige Strukturen, welche tiefer in das Außenteil und in das Einlageteil eingreifen, als dies bei herkömmlichen Einzelkomponenten möglich ist, welche nach deren individueller Fertigung ineinander eingesetzt werden.

Bevorzugt wird eine Ausgestaltung, bei dem das Einlageteil aus Metall ausgebildet ist und das Außenteil aus Kunststoff ausgebildet ist sowie das Verbindungsteil aus einem kunststoffhaltigen Spritzgussmaterial ausgebildet ist.

Das Verbindungsteil kann insbesondere aus einem härteren und/oder drehfesteren Material ausgebildet sein als einem Material des Außenteils, was eine stabilere Verbindung zwischen den beiden umliegenden Teilen ermöglicht.

Das Verbindungsteil greift bevorzugt mit ein Abziehen in Rotationsrichtung und/oder achsparalleler Richtung und/oder radialer Richtung verhindernden Verzahnungsstrukturen in das Einlageteil und/oder in das Außenteil ein, was eine gute Rotationsfestigkeit und/oder achsparallele Verschiebefestigkeit und/oder radiale Verschiebefestigkeit des Einlageteils und des Außenteils relativ zueinander bewirkt.

Erfindungsgemäß ist ein Verfahren zum Herstellen insbesondere eines solchen Zahnrads, bei dem ein Außenteil und ein Einlageteil mit einem Verbindungsteil formschlüssig verbunden werden, wobei zumindest ein solches Verbindungsteil zwischen das Außenteil und das Einlageteil gegossenen wird.

Das Verbindungsteil wird erfindungsgemäß mit einem Schirmanguss zwischen das Außenteil und das Einlageteil gegossen. Dies ermöglicht die Vermeidung von Übergangsbereichen zwischen bei üblichem Spritzgussverfahren in Rotationsrichtung und/oder radialer Richtung zusammen geflossenen Kunststoffmassen. Dadurch wird die Festigkeit insbesondere in Rotationsrichtung bzw. radialer Richtung erhöht.

Vor dem Gießen wird vorzugsweise das Außenteil mit außenseitigen Zähnen ausgebildet bereitgestellt und das Einlageteil mit außenseitigen Verzahnungsstrukturen ausgebildet bereitgestellt.

Das Verbindungsteil wird erfindungsgemäß aus einer achsparallelen Richtung als Schirmanguss zwischen das Außenteil und das Einlageteil gegossenen. Nachfolgend wird dann der seitliche Anguss auf einfache Art und Weise abgetrennt.

Das Verbindungsteil wird bevorzugt unter einem das Außenteil nach außen spannenden Druck gegossenen, so dass das Außenteil nach dem Erkalten des Gussmaterials unter einer gewünscht einstellbaren Spannung steht, insbesondere spannungsfrei ist.

Das Verbindungsteil wird vorzugsweise aus einem verstärkten Kunststoff gegossenen, um die Festigkeit zu erhöhen.

Ermöglicht wird somit die Ausgestaltung bzw. Herstellung eines insbesondere Zwei-Komponenten-Zahnrads, welches außen einen Zahnkranz in Form des außenseitig entsprechend strukturierten Außenteils mit unverstärktem Kunststoff und einer daran fertig gespritzten Verzahnung ermöglicht. Innen kann als das Einlageteil eine dünne, kostengünstige Stahlnabe umspritzt eingesetzt werden. Dazwischen wird ein Radkörper als das Verbindungsteil aus verstärktem Kunststoff, z. B. glasfaserverstärktem Kunststoff eingespritzt. Prinzipiell kann jedoch auch ein anderes Material eingespritzt werden, sogar ein metallisches Material eingegossen werden.

Entgegen einem klassischen Lösungsweg zur Bildung eines Zwei-Komponenten-Zahnrads, bei dem in ein Werkzeug eine Stahlnabe eingelegt wird, ein Radkörper umspritzt wird und dann ein Zahnkranz umspritzt wird, was hohe behinderte Schwundspannungen am Zahnkranz ergibt, wird vorteilhaft insbesondere eine Stahlnabe als das Einlageteil und ein separat gespritzter, insbesondere dünner Zahnkranz aus vorzugsweise unverstärktem Kunststoff in ein Spritzgusswerkzeug eingelegt, woraufhin der Zwischenraum mit verstärktem Kunststoff ein- bzw. ausgespritzt wird.

Ein besonderer Vorteil besteht darin, dass anstelle eines für sich bekannten Schrumpfens des Zahnkranzes durch Schwund und die Entstehung entsprechender Schwundspannungen durch den Spritzdruck beim Einspritzen des Verbindungsteils der Zahnkranz elastisch in außenseitiger Richtung gedehnt wird, wobei sich der Zahnkranz dabei vorzugsweise an einer Werkzeugwand des diesen umgebenden Werkzeugs abstützt. Anschließend schwindet der gespritzte Radkörper auf die insbesondere kleine Stahlnabe. Der zuvor beim Spritzen elastisch gedehnte Zahnkranz zieht sich wieder zusammen. Die Dehnung kann vorzugsweise so berechnet werden, dass der Zahnkranz im erkalteten Zustand näherungsweise spannungsfrei ist.

Vorzugsweise erfolgt die Verbindung zwischen Zahnkranz und Radkörper über Formschluss, z. B. durch Hinterspritzungen, und/oder Stoffschluss, beispielsweise in Form einer Oberflächenanschmelzung von z. B. dem Zahnkranz aus verstärktem Polyamid mit Radkörperschmelze aus faserverstärktem Polyamid.

Mit einer solchen Verfahrensweise zum Herstellen eines Zahnrads kann bei Bedarf auch der Zahnkranz unter Druckspannung gebracht werden, wodurch eine höhere Zahnfuß-Tragfähigkeit erzielt wird. Insbesondere kann auch ein hochwertiger, temperaturbeständiger Zahnkranzwerkstoff, z. B. Peek, mit kostengünstigem Radkörperwerkstoff kombiniert werden. Erzielbar ist eine Reduktion der Wärmeausdehnung, weil der Zahnkranz dünn ausgebildet werden kann und nur einen geringen Anteil am gesamten Körper des Zahnrads liefert.

Ein Ausführungsbeispiel wird nachfolgend anhand der Zeichnung näher erläutert. Es zeigen:
- Fig. 1: einen Schnitt durch ein Zahnrad,
- Fig. 2: getrennt voneinander drei Einzelkomponenten eines solchen Zahnrads in seitlicher Schnittansicht,
- Fig. 3: getrennt voneinander drei Einzelkomponenten eines solchen Zahnrads in perspektivischer Schnittansicht,
- Fig. 4: getrennt voneinander zwei erste Einzelkomponenten eines solchen Zahnrads in seitlicher Schnittansicht während eines ersten Herstellungsschritts,
- Fig. 5: die beiden durch eingespritztes Material verbundenen Einzelkomponenten gemäß Fig. 4 in seitlicher Schnittansicht während eines zweiten Herstellungsschritts und in perspektivischer Seitenansicht nach diesem zweiten Herstellungsschritt und
- Fig. 6: ein derart hergestelltes Zahnrad in seitlicher Schnittansicht nach einem letzten Herstellungsschritt in zwei Ansichten.

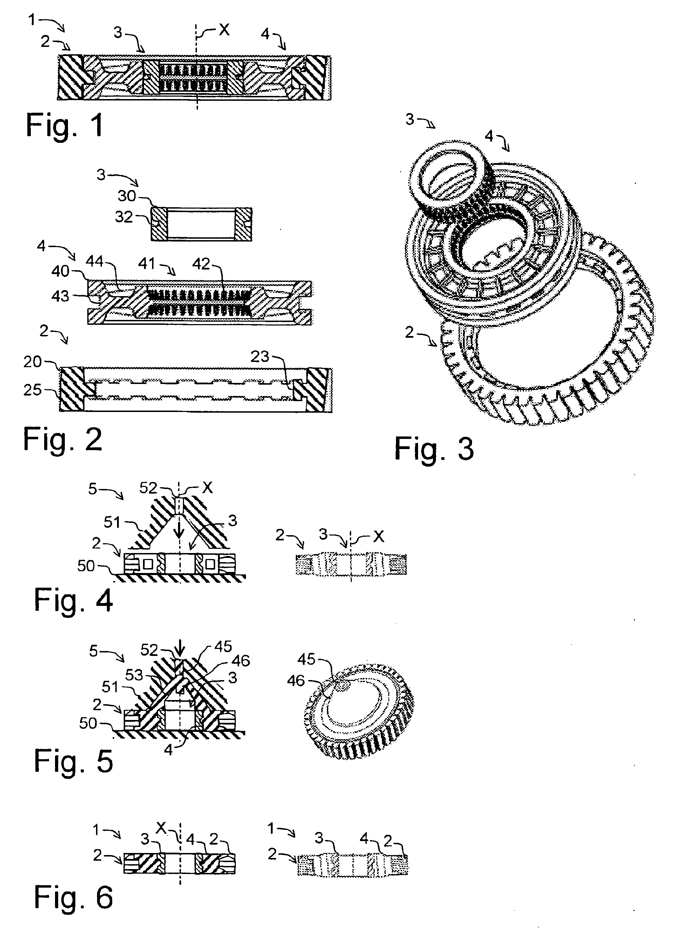

Wie aus Fig. 1 - 3 ersichtlich, besteht ein beispielhaftes Zahnrad 1 aus mehreren Zahnrad-Einzelkomponenten, wobei beispielhaft ein Zahnrad 1 aus drei Komponenten dargestellt ist. Außenseitig weist das Zahnrad 1 ein Außenteil 2 auf, welches den eigentlichen Zahnkranz ausbildet. In radialer Richtung ist dieses Außenteil 2 dabei vorzugsweise nur sehr dünn bzw. gering erstreckend dimensioniert. Innenseitig weist das Zahnrad 1 ein Einlageteil 3 auf, üblicherweise ein Einlageteil 3, welches als Nabe ausgebildet ist. Während das Außenteil 2 vorzugsweise aus einem relativ weichen Kunststoffmaterial gefertigt ist, wie dies für Zahnräder für sich genommen bekannt ist, ist das Einlageteil 3 vorzugsweise als Metallnabe, beispielsweise als Stahlnabe ausgebildet, wie dies ebenfalls für sich genommen bekannt ist.

Der Außenumfang des Einlageteils 3 ist vom Innenumfang des Au-ßenteils 2 räumlich beabstandet, so dass diese in einem Werkzeug lose ineinander eingelegt werden können. Die Verbindung des Einlageteils 3 und des Außenteils 2 erfolgt über ein Verbindungsteil 4 zum formschlüssigen Verbinden des Außenteils 2 und des Einlageteils 3. Das Verbindungsteil 4 wird zwischen das Außenteil 2 und das Einlageteil 3 gegossen, so dass das Verbindungsteil des fertig gestellten Zahnrads 1 aus einem gegossenen Material ausgebildet ist.

Optional kann die Verbindung von Außenteil und Einlageteil auch durch Zwischenschalten weiterer insbesondere ringförmiger Elemente und dann mehrerer derartig gegossener Verbindungsteile erfolgen. Mit Blick auf eine hohe Stabilität und einen geringen Fertigungsaufwand wird jedoch ein Zahnrad besonders bevorzugt, welches anstelle einer Vielzahl von Verbindungsteilen nur ein einziges Verbindungsteil zwischen einem einzigen Einlageteil und einem einzigen Außenteil aufweist.

Soweit anhand der Fig. 2 und 3 die drei Einzelkomponenten getrennt voneinander dargestellt sind, dient dies lediglich zur besseren Darstellbarkeit der jeweils aneinander anliegenden bzw. ineinander eingreifenden Oberflächen dieser drei Komponenten. So weisen vorzugsweise sowohl die Innenseite als auch die Außenseite des Verbindungsteils 4 Verzahnungsstrukturen 42, 43 auf, welche in entsprechende Verzahnungsstrukturen 32, 23 des Einlageteils 3 bzw. des Außenteils 2 eingreifen. Die Verzahnungsstrukturen 32, 42, 23, 43 sind dabei vorzugsweise so geformt, dass eine sowohl rotationsfeste als auch in axialer und radialer Richtung einer Rotationsachse X feste Verbindung zwischen dem Außenteil 2, dem Verbindungsteil 4 und dem Einlageteil 3 entsteht.

Anhand der Fig. 4 - 6 ist ein Herstellungsverfahren zum Herstellen eines solchen Zahnrads 1 beispielhaft skizziert. Gleiche Bezugszeichen wie in den übrigen Figuren, insbesondere den Fig. 1 - 3, verweisen dabei auf gleiche oder gleich wirkende Komponenten bzw. Funktionsmerkmale, so dass diesbezüglich auch auf übrige Beschreibungsabschnitte verwiesen wird.

Fig. 4 zeigt einen ersten Herstellungsschritt, bei dem auf einem Untergrund 50 eines Werkzeugs 5 das Außenteil 2 und darin liegend das Einlageteil 3 in der relativ zueinander gewünschten Stellung angeordnet sind. Optional sind das Außenteil 2 und das Einlageteil 3 dabei durch Hilfsmittel des Werkzeugs 5 hinsichtlich der Position zueinander fest festgelegt. Insbesondere kann das Außenteil 2 außenseitig von einer nicht dargestellten Umfangswandung umgeben sein, welche einen einem innenseitigen Spritzdruck entgegenwirkenden Druck auf die Außenseite des Außenteils 2 ausüben kann.

Von der Oberseite her wird ein Werkzeugoberteil 51 auf diese Anordnung so aufgesetzt, dass über einen Spritzgusskanal 52 eingespritzter Kunststoff den Raum zwischen dem Einlageteil 3 und dem Außenteil 2 mit dem gegossenen Material ausfüllt, wie dies in Fig. 5 dargestellt ist. Um zu verhindern, dass Spritzgussmaterial in den Innenraum des Einlageteils 3 eindringt, wird vor dem Spritzen und insbesondere vor dem Aufsetzen des Werkzeugoberteils 51 in den offenen Raum des Einlageteils 3 ein Werkzeugeinsatz 53 eingesetzt.

Durch ein solches Spritzverfahren von der aus axialer Richtung X gesehenen Seite her entsteht ein Zahnrad mit einem seitlichen Schirmanguss 46, welcher von der Seitenwandung des Zahnrads bzw. des ausgebildeten Verbindungsteils schirmförmig zum Angussteil 45 hin verläuft. Der Schirmguss bietet eine Einspritzung des Materials in den Zwischenraum zwischen dem Einlageteil 3 und dem Außenteil 2 ohne in Umfangsrichtung bzw. Rotationsrichtung des späteren Zahnrads Übergänge von aufeinander zu gelaufenem Material auszubilden. Wie Sollbruchstellen wirkende Nahtstellen werden so vermieden, so dass die Festigkeit in Rotationsrichtung und in radialer Richtung optimiert wird.

In einem nachfolgenden Herstellungsschritt wird der derart ausgebildete seitliche Schirmanguss 46 abgetrennt, beispielsweise abgeschnitten oder spanend abgehoben, so dass letztendlich ein wie in Fig. 6 dargestelltes Zahnrad 1 ausgebildet wird.

## Patentansprüche

1. Verfahren zum Herstellen eines Zahnrads (1), bei dem ein Außenteil (2) und ein Einlageteil (3) mit einem Verbindungsteil (4) formschlüssigen verbunden werden, wobei das Verbindungsteil (4) zwischen das Außenteil (2) und das Einlageteil (3) gegossen wird,
**dadurch gekennzeichnet, dass**
das Verbindungsteil (4) mit einem Schirmanguss (46) aus einer achsparallelen Richtung (X) zwischen das Außenteil (2) und das Einlageteil (3) gegossenen wird und nachfolgend der derart ausgebildete seitliche Schirmanguss (46) abgetrennt wird.

2. Verfahren nach Anspruch 1, bei dem vor dem Gießen das Außenteil (2) mit außenseitigen Zähnen ausgebildet bereitgestellt wird.

3. Verfahren nach einem der Ansprüche 1 oder 2, bei dem vor dem Gießen das Einlageteil (3) mit außenseitigen Verzahnungsstrukturen (42, 43) ausgebildet bereitgestellt wird.

4. Verfahren nach einem der Ansprüche 1 bis 3, bei dem das Verbindungsteil (4) unter einem das Außenteil (2) nach außen spannenden Druck gegossen wird.

5. Verfahren nach einem der Ansprüche 1 bis 4, bei dem das Verbindungsteil (4) aus einem verstärktem Kunststoff gegossen wird.

## Claims

1. A method of producing a gearwheel (1), in which an outer part (2) and an insert part (3) are connected to a connecting part (4) in a positively locking manner, wherein the connecting part (4) is cast between the outer part (2) and the insert part (3), **characterized in that** the connecting part (4) is cast with a sprue attachment (46) from an axially parallel direction (X) between the outer part (2) and the insert part (3), and after that the lateral sprue attachment (46) formed in this way is removed.

2. A method according to claim 1, in which before the casting the outer part (2) is produced with teeth formed on the outside.

3. A method according to one of claims 1 or 2, in which before the casting the insert part (3) is produced with toothed structures (42, 43) formed on the outside.

4. A method according to any one of claims 1 to 3, in which the connecting part (4) is cast under a pressure which stresses the outer part (2) towards the outside.

5. A method according to any one of claims 1 to 4, in which the connecting part (4) is cast from a reinforced plastics material.

## Revendications

1. Procédé de fabrication d'une roue dentée (1) selon lequel on relie une pièce extérieure (2) et une pièce formant insert (3) à une pièce de liaison (4) par une liaison par la forme,
la pièce de liaison (4) étant coulée entre la pièce extérieure (2) et la pièce formant insert (3),
procédé **caractérisé en ce qu'**
on coule la pièce de liaison (4) avec une coulée de protection (46) dans une direction (X) parallèle à l'axe entre la pièce extérieure (2) et la pièce formant insert (3) et ensuite on enlève la coulée de protection (46), latérale ainsi réalisée.

2. Procédé selon la revendication 1,
selon lequel, avant de couler, on utilise la pièce extérieure (2) déjà munie des dents côté extérieur.

3. Procédé selon l'une des revendications 1 ou 2,
selon lequel avant de couler, on utilise la pièce formant insert (3) avec des structures de denture côté extérieur (42, 43).

4. Procédé selon l'une des revendications 1 à 3,
selon lequel on coule la pièce de liaison (4) sous une pression mettant en tension la pièce extérieure (2) en direction de l'extérieur.

5. Procédé selon l'une des revendications 1 à 4,
selon, lequel on coule la pièce de liaison (4) en une matière plastique armée.
